# EUROPEAN PATENT APPLICATION

(11) **EP 2 036 651 A1**
(43) Date of publication of application: **18.03.2009**
(21) Application number: 08164075.7
(22) Date of filing: 10.09.2008
(51) Int. Cl.: B23K 26/00, F15B 15/14, F15B 15/28

(54) **Method of providing a machine readable marking on a substrate by laser ; Actuator with a part having such a marking**

(30) Priority: 12.09.2007 GB 0717765
(71) Applicant: J.C. Bamford Excavators Ltd., Staffordshire, ST14 5JP (GB)
(72) Inventor: Lightfoot, Paul Thomas, Stoke-on-Trent ST9 9PA (GB); Griffiths, Jonathan Edward, Cheadle Staffordshire Moorlands ST10 1N (GB); Wood, William Andrew Care, Haddigton East Lothian EH41 4PJ (GB)
(74) Representative: Lucking, David John

(57) **Abstract**

A method of providing a machine readable marking on a substrate (20) being a part of an actuator (15) is described, in which the marking includes at least first and second marks and the method including repeatedly firing a laser device so that at each of a plurality of row positions of a first area of the substrate (20), substrate material (20) is heated and displaced thus to provide a depression (d) in the surface of the substrate (20) at least martial surrounded by displaced material, the method including providing a plurality of rows of such depressions in the first area to form the first mark, repeatedly firing a laser device so that at each of a plurality of row positions of a second area of the substrate (20), substrate material (20) is heated and displaced thus to provide a depression in the surface of the substrate (20) at least partially surrounded by displaced material, the method including providing a plurality of rows of such depressions in the second area to form the second mark, and wherein each depression of the rows of depressions of the first and second marks has a depth determined from the general surface of the substrate (20) less than 4µm, and the height of the displaced material determined from the general surface of the substrate (20) is not greater than 4µm.

## Description

### Description of Invention

This invention relates to a method of providing a machine readable marking on a substrate which is a part of an actuator, such as a hydraulic actuator.

In one example, an actuator includes a housing part in which linearly slides a piston, the piston being secured to a piston rod which extends outwardly of the housing part. The piston rod typically passes through a pressure seal so that chambers to either side of the piston in the housing part, can be filled with pressurised fluid to move the piston in the housing part.

It has been proposed for the purposes of control, to provide a machine readable marking such as a scale, along the piston rod, so that the extent of the piston rod externally of the housing part can be determined. For example, our prior patent number GB-A-2335980 teaches providing a marking being a bar code on the piston rod in which a reading device reads the marking by detecting different reflectivities of incident light.

The provision of such a marking however provides a discontinuity along the piston rod. It will be appreciated that frequent passing of the marking past the seal, which typically is of a polyurethane material, can result in premature seal wear.

Conventional laser marking techniques which are used to provide the machine readable marking typically ablate the substrate and at each position where the laser is fired, form a deep depression. Material which is ablated from the depression and is not entirely removed from by the laser, tends at least partially to accumulate at the surface and at least partially surround the depression. Such techniques tend to result in a very rough surface finish which can rapidly damage the pressure seal.

It has been found that smoothing the surface subsequent to the laser treatment e.g. by polishing to remove high peaks of material around the depression can make subsequent machine reading of the marking unreliable, as polishing produces flat areas resulting in high levels of normal reflections from the surface immediately around the depression where desirably to differentiate the depression from the surrounding surface, low or nil levels of normal reflections are required.

It has been proposed in patent application WO2006/120440 to use a lower powered laser to displace substrate material at the surface rather than ablate it, but this still teaches providing deep depressions. As substrate material is not ablated, all the material which is displaced from the deep depression accumulates at the surface, at least partially surrounding the depression, and so again, a rough surface finish is produced.

According to a first aspect of the invention we provide a method of providing a machine readable marking on a substrate being a part of an actuator according to claim 1.

By virtue of the present invention the marking which is produced provides a more reliable machine readable marking than the previous proposals.

Preferably the plurality of rows of depressions of each of the first and second areas are respectively, generally parallel. Thus each of the first and second markings may be provided by the respective plurality of rows of depressions, with displaced substrate material from adjacent rows of depressions separating the adjacent rows. However if desired, at least some of the plurality of rows of depressions of each mark may extend transversely to another of the rows as desired.

In each case though, in a preferred embodiment, the first and second marks are of substantially the same width, with the distance between the first and second marks being used by a reading device to determine the nature of the marking.

Where either mark of the marking has at least two generally parallel rows of depressions immediately adjacent one another, by which we mean with no intervening row, the depressions in each such generally parallel row may be closely spaced in a direction along the row so that there is minimal displaced material between adjacent depressions along the row, so that the displaced material is in the main, displaced to either side of the generally parallel rows, and to between the rows.

The invention is particularly applicable where the part of the actuator on which the marking is provided, is a piston rod of a linear actuator which includes a housing part in which linearly slides a piston, the piston being secured to the piston rod which extends outwardly of the housing part, the piston rod passing through a pressure seal. The first and second marks of the marking may each be elongate and may each extend in a direction transverse, preferably normal, to the direction of movement of the piston rod in and out of the housing part.

It will be appreciated that with an appropriate marking reading device, the depths of the depressions and commensurate height of displaced material could be minimised, for example to less than 0.25µm, but in this case the frequent passing of the marking on the piston rod through the pressure seal may rapidly wear the marking and in a short time render the marking non-machine readable.

Preferably therefore the laser device is powered, and at each row position the laser device is fired for a time, such that the depressions each have a depth determined from the general surface of the substrate greater than 0.15 µm and preferably greater than 0.25µm. The height of the displaced material determined from the general surface of the substrate may thus be greater than 0.15µm.

Preferably the depressions each have a depth determined from the general surface of the substrate less than 3µm and more preferably a depth of between 3µm and 0.5µm in which case the height of the displaced material determined from the general surface of the substrate will be not greater than 3µm and 0.5µm respectively. Further desirably, the depressions each have a depth determined from the general surface of the substrate in the range 3µm and 1 µm.

To provide optimum optical discrimination between the first and second or more areas where the marking is provided, the surrounding substrate surface may have a surface finish of Ra=0.3 or better. Thus in this specification, by "general surface" of the substrate, we mean the nominal surface of the substrate being a plane above and below which there may be surface finish irregularities of generally equal extent.

Where the part of the actuator on which the marking is provided is a piston rod, the substrate may thus have a curved surface, and the first and second marks may each extend circumferentially around the curved surface. Each of the first and second marks preferably extend circumferentially around the curved surface parallel to and alongside one another with the circumferential length of the marking being less than 10mm, but preferably more than 5mm.

It has been found that for a typical piston rod for a working machine, which may have a radius of up to 70mm by maintaining the circumferential extent of the marking to less than 10mm, and preferably between 5mm and 10mm, the pressure seal is able adequately to maintain the fluid pressure as the marks of the marking on the piston rod passes the seal. If the circumferential extent of the marking is greater than this, at least for a piston rod having a radius of up to 70mum, a typical pressure seal made of, for example, polyurethane may not adequately maintain the pressure seal.

In a preferred embodiment, each of the first and second marks includes more than two rows of depressions. Desirably the centres of the depressions of immediately adjacent rows are spaced apart by a distance in the order of 0.04mm. Adjacent parallel rows may be separated by for example, a spacing in the order of 0.02mm onto which space the material from the depressions of the rows, may be displaced.

In one embodiment, the overall width of each of the first and second marks, is in the order of 0.3mm. As taught in our previous patent GB-A-2335980, desirably all of the marks of the marking are of substantially the same overall width, but the spacing between at least some adjacent pairs of marks being different to the spacing between at least other adjacent pairs of the marks so that the marking may be read to identify a code indicative of the extent of the piston rod or other actuator part relative to a datum such as the housing part.

According to a second aspect of the invention we provide a method of providing a machine readable marking on a curved substrate being a part of an actuator according to claim 13.

The circumferential length of the marking may be between 5mm and 10mm.

According to a third aspect of the invention we provide an actuator according to claim 15.

According to a fourth aspect of the present invention we provide a working machine according to claim 16.

Embodiments of the present invention will now be described with reference to the accompanying drawings in which:-
FIGURE 1 is an illustrative drawing of a working machine which includes an actuator on which a marking may be provided, according to the invention;
FIGURE 2 is an illustrative drawing of the marking;
FIGURE 3 is an illustrative drawings of a depression in a surface of a part of the actuator, which is part of a mark of the marking;
FIGURE 4 is an illustrative perspective view of the depression of figure 3;
FIGURE 5 is a view similar to figure 3 but of a plurality of rows of depressions which together make up a mark;
FIGURE 6 is an illustrative perspective view of the mark of figure 5 and some surrounding surface of the actuator part;
FIGURE 7 is an illustrative part cross sectional view through the actuator in the vicinity of a fluid seal thereof.

Referring to the drawings, a working machine 10 includes a body 11 on which is mounted for pivotal up and down movement, a working arm 12 which in the present case is a loading arm, but could in another example be an excavating arm. In each case the working arm 12 mounts a working implement (not seen) for performing working operations. The machine 10 includes a ground engaging structure which in this example is provided by four wheels 14 mounted in pairs on respective axles.

The arm 12 is pivotal up and down by a hydraulic actuator 15 which in the present example is of the double acting type, which includes a housing part 18 in which linearly slides a piston 19, the piston 19 being secured to a piston rod 20 which extends outwardly of the housing part 18. The piston rod 20 passes through a fluid pressure seal 22 so that chambers C1 and C2 to either side of the piston 19 in the housing part 18, can selectively be filled with pressurised fluid to move the piston 19 in the housing part 18. Chamber C1 is at the so called annulus side of the piston 19, and chamber C2 is at the so called non-annulus side of the piston 19. When chamber C2 is pressurised with hydraulic fluid, the working arm 12 is raised, and when chamber C1 is pressurised, the working arm 12 is lowered (although gravity may assist this process).

The working arm 12 may include one or more hydraulic actuators inside or outside the working arm 12 to extend and retract sections of the working arm, and the working implement may be moved relative to the remainder of the working arm by an hydraulic actuator. Thus although the invention is explained below with reference to the lifting actuator 15, it will be appreciated that the invention may alternatively or additionally be applied to another or others of the actuators of the working arm 12 which are used to manipulate the arm 12 or a part thereof.

For control purposes, e.g. to coordinate the operation of the actuator 15 with another actuator, and/or for full or partial automation of the operation of the machine 10, it is require to determine with a reading device 25 the extent of extension of the piston rod 20 from the housing part 18. This is achieved by providing on the piston rod 18 a marking M which includes a plurality of marks b1 to b7 in the example, each of which marks b1-b7 are in the example elongate bars, separated by spaces. The marking is provided in the metal surface of the piston rod 20.

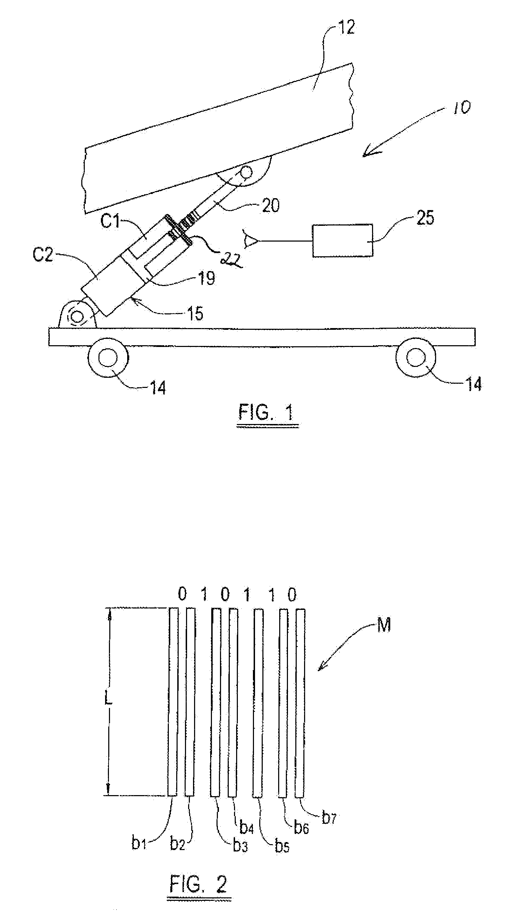

Each bar b1-b7 is provided on an area of the marking M. In this particular embodiment, as illustrated in figure 2, each of the bars b1, b2, b3 etc. are of the same general widths over their lengths L. In practice, the marking M is likely to have many more than the seven bars b1-b7 illustrated each in its own area of the marking M, so that the extension of the piston rod 20 over a large range can be determined by the reading device 25. The minimum number of bars or marks in their respective areas is two.

In this example, the spaces between individual pairs of adjacent bars is one of two spacings. In the example, the spacing between the first and second bars b1, b2 is of a first spacing, as is the spacing between bars b3 and b4, and bars b6 and b7. However the spacing between the adjacent pair of bars b2 and b3 is double the spacing between bars b1 and b2, as is the spacing between bars b4 and b5, and bars b5 and b6.

The reading device 25, as the marking M moves past the reading device 25, can therefore read the marking M as a binary code depending upon the spacings between the bars b1-b7. So in the example in figure 2, the marking M reads 010110.

The sequence of bar spacings along the marking M will be unique such that by the reading device 25 reading the code which is visible on the piston rod 20 exteriorly of the housing part 18 of the actuator 15, the reading device 25 can determine the extent of the piston rod 20 i.e. the amount of its extension from the housing part 18, and hence the amount by which the loader arm 12 has been lifted (or lowered) can be absolutely determined.

It will be appreciated that in a practical example, there would be many more bars b1-b7 than are shown for illustrative purposes in figure 2, but with the marking M being read as the piston rod 20 moves relative to the reading device 25 whilst each of the bars b1-b7 etc. has a length L which extends transversely, preferably normally, to the direction of relative movement on the curved surface of the piston rod 20.

The bars b1, b2 etc. are each formed in the same way, using a laser. The method of formation of a single bar, bar b2 will be described by way of example.

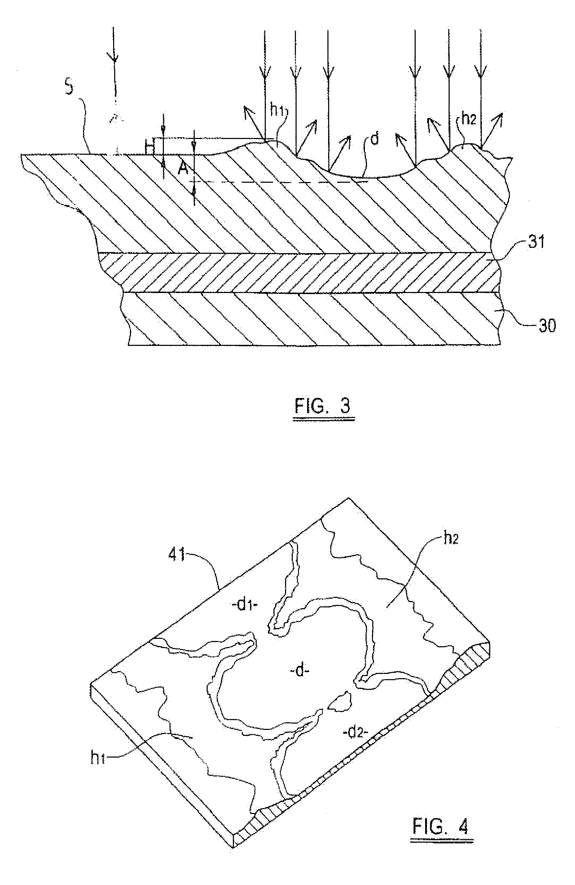

A relatively low powered laser, compared with previous methods in which the surface of a substrate is ablated, is used. The laser may for example have a frequency in the range of 10-100 kHz, and preferably in the range 15-30kHz. The laser may be powered and fired for a duration such that at each position where the laser is fired, the substrate i.e. the surface S of the piston rod 20, is not ablated at all or at least to any significant extent, but the laser causes the substrate material to soften, and the material is displaced as seen best in figures 3 and 4.

This displacing of surface material forms a depression d, with the material which is displaced accumulating around the depression d, at least partially surrounding the depression d. In figure 3, the accumulated material to either side of the depression d is illustrated at h1, h2. In figure 4, it can be seen that there is little debris accumulated other than at the sides (h1 and h2) of the depression, because in figure 4 it can be seen that the depression d is one of a series of depressions (d1, d, d2) of a row 41 of closely spaced depressions, so that as the next depression d2 of the row for example, is formed by firing the laser again, material displaced in forming the previous depression d which would otherwise accumulate adjacent the rim of that depression d2 is further displaced sideways.

It can be seen from figure 3 particularly, that each depression d is shallow and crater-like, the bottom of the crater being a distance A not more than about 4µm from the general surface of the substrate as seen at S. Moreover, the displaced material h1, h2 which is in the main, displaced to the sides of the row of depressions d1, d, d2, extends upwardly of the general surface S of the substrate, to a height H of not more than about 4µm.

By forming each depression d of the plurality of rows of depressions as described, using a relatively low power laser which does not ablate the substrate surface S, and firing the laser for a period at each row position to form the shallow depressions d, it can be seen that the surface S of the substrate is such that light falling on the surface S normally, e.g. during reading of the marking M with the reading device 25, is not reflected normally, but is scattered, as no part of the depression d or the accumulated surface material h1, h2 has a flat surface to reflect the incident light normally. Thus the depression d, or rather the row of depressions d and the accumulated debris material h1, h2, will appear dark, thereby enabling the reading device 25 to discriminate between general areas of the surface S where no rows of depressions d are formed, and the area where there are rows of depressions d.

Most desirably, each depression d is formed to have a depth A of between 0.5µm and 3µm from the general surface S of the substrate S, and thus the accumulated material h1, h2 preferably extends upwardly from the general surface S to a height H of between 0.5µm and 3µm. In any event, desirably, the depression d depths are greater than 0.15µm and yet more preferably are in the range 1µm to 3µm to resist wear.

The surface S is shown as a flat plane. If looked at microscopically, the surface S will have surface finish irregularities which extend above and below the plane. The plane shown is drawn at a mean position of such surface finish irregularities, and as will be understood by a person skilled in the art, the surface S drawn is representative of a nominal surface of the piston rod 20. The surface finish is preferably Ra=0.3 or better.

In figure 3 it can be seen that the piston rod 20 has a layered construction. The structural base of the piston rod 20 is of steel and is indicated at 30. The base 30 is coated with in this example, a layer of bronze 31, and an uppermost metal layer 32 which provides the surface S is of chromium. The bronze and uppermost layers 31, 32 together may have a thickness in the order of 50µm. In another example, instead of the bronze layer 31 and the chromium layer 32, double chromium layers, or a double thickness upper chromium surface layer 32 e.g. of about 50µm thickness could be provided. In each case though, it can be seen that the depressions d are formed in the uppermost surface layer 32 i.e. metal surface and that the depressions d do not extend depthwise, to the intermediate layer 31 or the base layer 30.

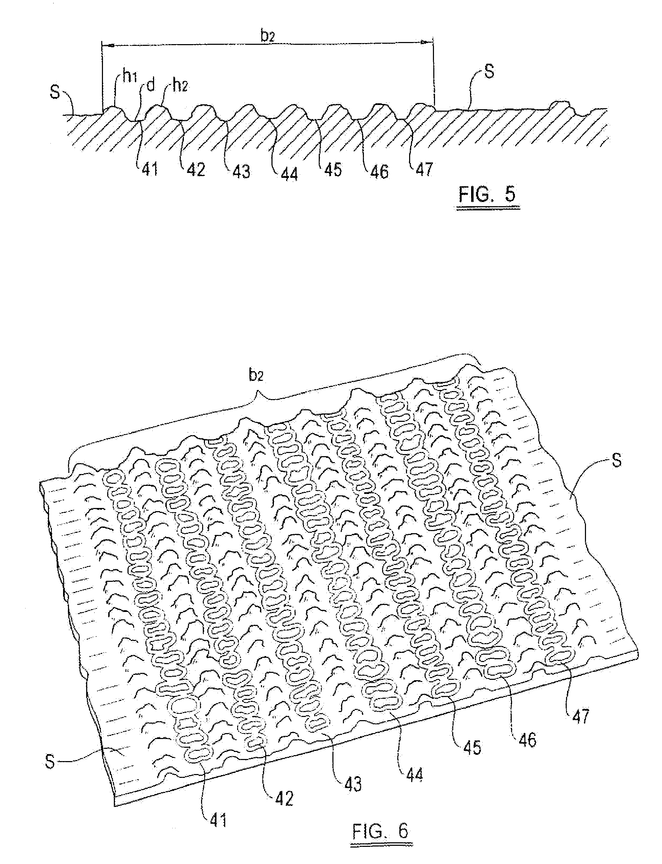

The row of depressions d1, d, d2 shown in figure 4 is only one row of a plurality of rows of depressions, seven in the example, as indicated in figure 6 at 41-47, which rows 41-47 together provide the single bar b2 of the marking M on an area of the substrate S. The plurality of rows 41-47 are all closely spaced, so that debris material which is displaced from the depressions of each of the pairs of adjacent rows 41-47 accumulates between the adjacent rows. For example, the end row 41 which includes the plurality of depressions d1, d, d2 etc, and the immediately adjacent row 42, have between them material h2 displaced from the depressions d of both of the rows 41, 42 of depressions, with no perceivable space of general surface S between the rows 41, 42. This is best seen in figure 6.

In the example, the overall width of the bar b1 on the first area of the substrate S is in the order of 0.3mm. The rows of depressions d may therefore each have centres in the order of about 0.04mm apart. However, where more or less rows 41-47 of depressions d are provided to make up the bar b2, this spacing may vary. Preferably though, the row spacing, i.e. the distance between the centres of adjacent rows of depressions d, is an order of magnitude greater than the depths of the depressions d of the rows from the general surface S of the substrate.

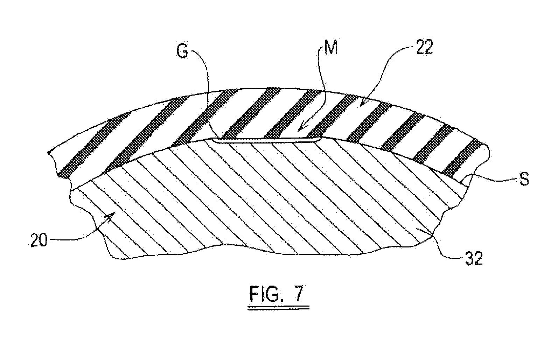

Referring to figure 7, a cross section through the solid piston rod 20 is illustrated, where the piston rod 20 passes through the fluid pressure seal 22. The seal 22 typically is of a polyurethane material, and is resiliently slightly stretched around the piston rod 20 thereby to provide the pressure seal.

It can be seen that the marking M, which includes in the example the plurality of bars b1-b7 etc. extends circumferentially around the curved cylindrical surface S of the piston rod 20, with each bar b1-b7 extending longitudinally, normal to the axis of the piston rod 20. As a bar, e.g. bar b2 of the marking M passes the seal 22, it can be seen that there is a discontinuity G formed in the surface S of the piston rod 20.

It has been found that to minimise the risk of fluid passing from chamber C1 of the actuator 15 between the seal 22 and the piston rod 20, via the discontinuity G, the circumferential extent of the bar b2 and of each bar b2-b7 etc. of the marking M, should not exceed 10mm and preferably is in the range 5-10mm around the curved surface 20 for a typical piston rod 20 with a radius in the order of 70mm. The circumferential extents of the bars b1-b7 etc. will not be very dissimilar to the length L shown in figure 2, although this figure indicates L to be a linear distance.

It will be appreciated that the reading device 25 which reads the marking M may be able read a much shorter marking M than the 10mm circumferential extent for example down to 50µm. However it will be appreciated that in practice, as the working arm 12 moves up and down, forces e.g. due to the weight of the load being handled and the weight of the working arm itself, can result in minor distortions. Accordingly, to ensure that the marking M extends circumferentially around the piston rod 20 sufficiently for the marking M always to be readable by the reading device 25, the marking M desirably has the circumferential extent described. In the generality, the marking M may have a circumferential extent greater than 5mm and less than 10mm.

This maximum and minimum circumferential desirable extent might vary depending upon the curvature of the curved piston rod 20 surface S and the nature of the seal 22.

Most desirably the marking M is provided on the piston rod 20 surface S subsequent to any polishing of the chromium or other substrate surface S, so that the displaced debris material h1, h2 which accumulates around the depressions of the marking M are not provided with any flat faces which could lead to undesirable normal light reflections in the vicinity of the depressions d.

When reading the marking M, the reading device 25 will primarily receive reflections from the general surface S of the piston rod 20 where the rows 41-47 of depressions d are not provided, and so the reading device will be able to discriminate between the dark areas of the bars b1-b7 etc. and light areas where the bars b1-b7 etc. are not provided.

To provide optimum optical discrimination between the first and second or more areas where the marking is provided, the surrounding substrate surface may have a surface finish of Ra=0.3 or better.

Various modifications may be made without departing from the scope of the invention. As indicated above, each bar b1-b7 etc. could have more than the seven rows 41-47 of depressions d as in the example. Moreover, in the example indicated, each of the rows 41-47 of depressions d of each bar b1-b7 etc. are parallel and extend in the same direction as the longitudinal/circumferential extent of the bars b1-b7 etc. In another example, at least some of the rows 41-47 of at least one of the bars b1-b7 etc. may extend transversely to other rows. All of the rows 41-47 of one bar e.g. b2 may extend in one direction if desired, and all of the rows of another bar e.g. bar b3 might extend in a common direction transverse to the rows of the bar b1.

In the example, the bars b1-b7 of the marking M are all of the same width, with the spacings between the bars b1-b7 etc. varying to create the readable code marking M. In another example, the widths of the bars b1-b7 etc. may be varied instead of or in addition to the spacings between them. In yet another example, the marking might be a scale with each of the bars b1-b7 being equally spaced graduations, and of about the same thickness too. In every case though, the marking M is machine readable.

The invention has been described particularly in relation to a linearly extending actuator in which the marking M is provided on a curved surface S of a piston rod 20, so that the degree of axial extension of the piston rod 20 from the housing part 18 of the actuator 15 can be determined. However the invention may be applied for providing a marking M on a part of an actuator to determine the degree of rotation of the part of the actuator.

For example a rotary actuator may include a shaft which is rotated by e.g. pressurised fluid. In this case, bars b1-b7 etc. of the marking would need to extend along the shaft rather than circumferentially around it so that the reading device 25 can read the marking M to determine the degree of rotation of the shaft.

In yet another example, the marking M could be applied to a planar substrate surface of an actuator, such as a disc which is rotated.

In each case, the reading device 25, by reading the bar code of the marking M, can determine the position of the part on which the marking M is provided, relative to another actuator part.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of providing a machine readable marking on a substrate (S) being a part (20) of an actuator is described, in which the making (M) includes at least first and second marks (b1, b2), and the method including repeatedly firing a laser device so that at each of a plurality of row positions (41-47) of a first area (b1) of the substrate, substrate material is heated and displaced thus to provide a depression (d) in the surface of the substrate at least partially surrounded by displaced material, the method including providing a plurality of rows (41-47) of such depressions (d) in the first area (b1) to form the first mark (b1), repeatedly firing a laser device so that at each of a plurality of row positions (41-47) of a second area of the substrate, substrate material is heated and displaced thus to provide a depression (d) in the surface (S) of the substrate at least partially surrounded by displaced material, the method including providing a plurality of rows (41-47) of such depressions in the second area to form the second mark (b2), and wherein each depression (d) of the rows (41-47) of depressions of the first and second marks has a depth (A) determined from the general surface (S) of the substrate less than 4µm, and the height (H) of the displaced material determined from the general surface of the substrate is not greater than 4µm.

2. A method according to claim 1 **characterised in that** the plurality of rows of depressions (41-47) of each of the first (b1) and second (b2) areas are respectively, generally parallel, and the first and second markings (b1,b2) are provided by the respective plurality of rows of depressions (41-47), with displaced substrate material from adjacent rows of depressions (41-47) separating the adjacent rows.

3. A method according to claim 1 or claim 2 **characterised in that** the first and second marks (b1,b2) are of substantially the same width, with the distance between the first and second marks (b1,b2) being used by a reading device (25) to determine the nature of the marking.

4. A method according to claim 2 or claim 3 where dependent upon claim 2 **characterised in that** either mark (b1,b2) of the marking (M) has at least two generally parallel rows of depressions (41-47) immediately adjacent one another, and the depressions (d1,d,d2) in each such generally parallel row (41-47) are closely spaced in a direction along the row so that there is minimal displaced material between adjacent depressions (d1,d,d2) along the row (41-47), so that the displaced material is in the main, displaced to either side of the generally parallel rows (41,47), and to between the rows.

5. A method according to any one of the preceding claims **characterised in that** the laser device is powered, and at each row position the laser device is fired for a time, such that the depressions (d1,d,d2) each have a depth determined from the general surface of the substrate greater than 0.15µm, and wherein the height of the displaced material determined from the general surface (S) of the substrate is greater than 0.15µm.

6. A method according to any one of claims 1 to 4 **characterised in that** the laser device is powered, and at each row position the laser device is fired for a time, such that the depressions (d1,d,d2) each have a depth determined from the general surface (S) of the substrate greater than 0.25µm, wherein the height of the displaced material determined from the general surface of the substrate is greater than 0.25µm.

7. A method according to any one of the preceding claims wherein the depressions (d1,d,d2) each have a depth determined from the general surface (S) of the substrate less than 3µm, and desirably of between 3µm and 0.5µm.

8. A method according to clam 7 **characterised in that** the height of the displaced material determined from the general surface (S) of the substrate is less than 3µm, and preferably between 3µm and 0.5µm, and more preferably of between 1µm and 3µm.

9. A method according to any one of the preceding claims wherein the surface (S) surrounding the marking (M) has a surface finish of Ra=0.3 or better.

10. A method according to any one of the preceding claims in which the part (20) of the actuator (15) on which the marking (M) is provided is a piston rod (20), such that the substrate has a curved surface (S), wherein the first and second marks (b1,b2) extend circumferentially around the curved surface (S) parallel to and alongside one another with the circumferential length of the marking (M) being less than 10mm and more than 5mm.

11. A method according to any one of the preceding claims **characterised in that** each of the first and second marks (b1 ,b2) includes more than two rows (41-47) of depressions (d1,d,d2), the centres of the depressions of immediately adjacent rows (41-47) being spaced apart by a distance in the order of 0.04mm.

12. A method according to any one of the preceding claims **characterised in that** the overall widths of each of the first and second marks (b1,b2), is in the order of 0.3mm, and wherein all of the marks (b1 to b7) of the marking (M) are of substantially the same overall width, with the spacing between at least some adjacent pairs of marks (b1,b2; b3,b4; b6,b7) being different to the spacing between at least other adjacent pairs (d2,b3; b4,b5;b5,b6) of the marks.

13. A method of providing a machine readable marking (M) on a curved substrate (S) being a part of an actuator (15), the marking (M) including at least first and second marks (b1,b2), and the method including repeatedly firing a laser device so that at each of a plurality of positions of a first area (b1) of the substrate (S), substrate material is heated and displaced thus to provide a depression (d1,d,d2) in the surface (S) of the substrate at least partially surrounded by displaced material, the method including providing a plurality of rows (41-47) of such depressions (d1,d,d2) in the first area (b1) to form the first mark, repeatedly firing a laser device so that at each of a plurality of positions of a second area (b2) of the substrate (S), substrate material is heated and displaced thus to provide a depression (d1,d,d2) in the surface (S) of the substrate at least partially surrounded by displaced material, the method including providing a plurality of rows (41-47) of such depressions (d1,d,d2) in the second area (b2) to form the second mark (b2), and wherein each of the first and second marks (b1,b2) extends circumferentially around the curved surface (S) parallel to and alongside one another, the circumferential length of the marking being less than 10mm.

14. A method according to claim 13 wherein the circumferential length of the markings (b1,b2) is between 5mm and 10mm.

15. An actuator (15) including a part (20) on which there is provided a machine readable marking (M) by a method according to any one of the preceding claims, the actuator being a linear actuators (15) which includes a housing part (18) in which linearly slides a piston (19), the piston (19) being secured to a piston rod (20) which extends outwardly of the housing part (18) and the part (20) on which the machine readable marking is provided is the piston rod (20), the piston rod (20) in use passing through a pressure seal (22) of the actuator, so that chambers (c1 ,c2) to either side of the piston (19) in the housing part (18), can be filled with pressurised fluid to move the piston (19).

16. A working machine (10) which includes body (11), and a working arm (12) for carrying a working implement in order to perform working operations, the working arm (12) being pivotally mounted on the body (11) for up and down movement relative to the body (11), and there being an actuator (15) in accordance with claims 15 manipulating the working arm (12) or the implement or a part thereof.
